# EUROPÄISCHE PATENTSCHRIFT

(11) **EP 2 473 276 B1**
(45) Veröffentlichungstag und Bekanntmachung des Hinweises auf die Patenterteilung: **19.12.2018**
(21) Anmeldenummer: 10759571.2
(22) Anmeldetag: 21.08.2010
(51) Int. Cl.: B01J 29/46, B01J 37/12, B01J 37/16, B01J 29/72, B01J 37/08, B01D 53/94

(54) **VERFAHREN ZUR HERSTELLUNG EINES SCR AKTIVEN ZEOLITH-KATALYSATORS SOWIE SCR AKTIVER ZEOLITH-KATALYSATOR**
METHOD FOR THE PRODUCTION OF AN SCR-ACTIVE ZEOLITE CATALYST, AND SCR-ACTIVE ZEOLITE CATALYST
PROCÉDÉ DE PRODUCTION D'UN CATALYSEUR ZÉOLITHE À ACTION DE RÉDUCTION SÉLECTIVE CATALYTIQUE ET CATALYSEUR ZÉOLITHE À ACTION DE RÉDUCTION SÉLECTIVE CATALYTIQUE - SCR -

(30) Priorität: 05.09.2009 DE 102009040352
(43) Veröffentlichungstag der Anmeldung: 11.07.2012
(73) Patentinhaber: Johnson Matthey Catalysts (Germany) GmbH, 96257 Redwitz (DE)
(72) Erfinder: MÜNCH, Jörg Werner, 96215 Lichtenfels (DE); DOTZEL, Ralf, 90489 Nürnberg (DE)
(74) Vertreter: Wilson, Nicola Ann
(86) Internationale Anmeldenummer: PCT/EP2010/005140
(87) Internationale Veröffentlichungsnummer: WO 2011/026573

(56) Entgegenhaltungen:
- EP-A1- 1 852 174
- DE-T2- 69 021 249

## Beschreibung

Die Erfindung betrifft ein Verfahren zur Herstellung eines SCR aktiven Zeolith-Katalysators. Die Erfindung beschäftigt sich dabei mit dem Problem der relativ niedrigen SCR Aktivität eines Zeolith-Katalysators im Niedertemperaturbereich unterhalb von 300°C, falls im Abgas kein oder nur wenig NO₂ vorhanden ist.

Zur Entfernung von Stickoxiden in einem sauerstoffhaltigen Abgas, wie dem eines mit Luftüberschuss betriebenen Verbrennungsmotors, insbesondere eines Dieselmotors, sind Katalysatoren auf Basis von Titandioxid bekannt, an denen die Stickoxide in Anwesenheit von Sauerstoff mittels eines zugeführten Reduktionsmittels, wie insbesondere Ammoniak, zu molekularem Stickstoff und Wasser reduziert werden. Beispielhaft sei hierzu auf die DE 24 58 888 A1 verwiesen. Bei diesem Verfahren der selektiven katalytischen Reduktion, kurz SCR-Verfahren, wird dem Abgas vor Eintritt in den Katalysator das Reduktionsmittel oder eine sich im Abgas zu dem Reduktionsmittel umsetzende Vorläufersubstanz zugegeben. Beispielsweise ist als eine Vorläufersubstanz für das Reduktionsmittel Ammoniak Harnstoff bekannt, welcher insbesondere in Form einer wässrigen Harnstofflösung dem Abgas zugeführt wird. Alternativ sind als Reduktionsmittel auch Kohlenwasserstoffe bekannt, die insbesondere bei unvollständiger Verbrennung des Verbrennungsmotors als Verbrennungsprodukte bereits im Abgas enthalten sein können.

Die aus der DE 24 58 888 A1 bekannten SCR aktiven Katalysatoren umfassen eine keramische Katalysatormasse, die als Hauptbestandteil Titandioxid und als Beimengungen Oxide von Wolfram und/oder Vanadium umfasst. Als Katalysatorkörper kommen hierbei beschichtete Katalysatoren oder Vollkatalysatoren zum Einsatz. Bei den beschichteten Katalysatoren ist die Katalysatormasse auf einem Trägermaterial, wie insbesondere auf einem Cordierit (ein Magnesium-Alumino-Silikat der Zusammensetzung Mg₂Al₄Si₅O₁₈ mit rhombisch-dipyramidaler Struktur) aufgebracht, welches selbst katalytisch inaktiv ist. Ein Vollkatalysator hingegen ist im Ganzen aus der katalytisch aktiven Katalysatormasse gefertigt. Hierzu werden in der Regel die Ausgangsmaterialien zu einem knetbaren Schlicker verarbeitet, der zu einem durchgehende Kanäle aufweisenden Wabenkörper extrudiert wird. Anschließend wird der extrudierte Wabenkörper unter Verfestigung durch eine Temperaturbehandlung zu dem fertigen Vollkatalysator kalziniert.

Weiter sind als Bestandteile von SCR aktiven Katalysatoren auch Zeolithe bekannt. Zeolithe, d.h. Gerüst-Alumino-Silikate, bilden teilweise eine Struktur mit durchgehenden Kanälen eines Durchmessers in der Größenordnung von Gasmolekülen aus und eignen sich aufgrund ihrer hohen spezifischen Oberfläche insbesondere für eine selektive katalytische Reduktion.

So ist aus der DE 198 54 5502 A1 ein SCR aktiver Katalysator zum Abbau von Stickoxiden in Gegenwart eines Reduktionsmittels bekannt, der eine Titandioxid und einen Zeolithen umfassende Aktivmasse aufweist, wobei der Zeolith ein Wasserstoff-lon-getauschter, saurer Zeolith ist.

Auch aus der GB 2 193 655 A ist ein Katalysator zum Abbau von Stickoxiden gemäß dem SCR-Verfahren bekannt. Die Katalysatormasse des dort angegebenen Katalysators umfasst ein Titandioxid mit niedriger spezifischer Oberfläche sowie einen durch lonenaustausch erhaltenen, Kupfer enthaltenden Zeolithen. Als bevorzugte Zeolithe werden Mordenit, ZSM-5 und Ferrierit angegeben.

Weiter ist aus der EP 0 393 917 A2 ein Katalysator zum Abbau von Stickoxiden bekannt, dessen Katalysatormasse einen Zeolithen umfasst, welcher nach Ionen-Austausch Kupfer und/oder Eisen enthält. Als bevorzugte Zeolithe werden USY (Ultra Stabilized Y), Beta und ZSM-20 angegeben.

Des Weiteren ist aus der EP 0 219 854 A2 ein Katalysator bekannt, der Titandioxid in der Anatas-Modifikation sowie einen säurestabilisierten Zeolithen in der Wasserstoff - oder in der Ammonium-Form umfasst.

Schließlich ist aus der US 5, 271,913 A ein Katalysator zum Abbau von Stickoxiden nach dem SCR-Verfahren bekannt, dessen Katalysatormasse einen Zeolithen umfasst. Der Zeolith ist hierbei mit Ceroxid oder Eisenoxid imprägniert. Der angegebene Katalysator soll eine hohe Beständigkeit hinsichtlich schwefeliger Komponenten aufweisen. Als bevorzugter Zeolith wird ein Zeolith vom ZSM-5-Typ angegeben.

EP 1852174 A1 offenbart einen extrudierten Vollkatalysator zum Abbau von Stickoxiden in Gegenwart eines Reduktionsmittels sowie ein Verfahren zu seiner Herstellung. Der Vollkatalysator weist eine Katalysatormasse auf, die 60 bis 87 Gew.-% eines ionengetauschten, wenigstens ein Metall aus der Gruppe VIII des Periodensystems, die Cu, Hf, La, Au, V, In und Lanthanoide enthält, wobei die Katalysatormasse 10 bis 37 Gew.-% Aluminiumoxid und 2 bis 10 Gew.-% anorganische Fasern umfasst. Der Zeolith enthaltende Vollkatalysator kann durch Extrusion hergestellt werden und weist eine hohe mechanische Stabilität bei guter katalytischer Aktivität auf.

Zeolith-Katalysatoren können sowohl als beschichtete Katalysatoren als auch als Vollkatalysatoren hergestellt sein. Auch ist die Ausgestaltung eines Zeolith-Katalysators als ein Schüttgut-Katalysator, insbesondere in Form von Pellets, an sich bekannt.

In der Literatur wird insbesondere ein Fe-Ionen-getauschter Zeolith hinsichtlich seiner guten SCR Aktivität erwähnt. Beispielsweise wird in der Publikation "Ultra-Active Fe/ZSM-5 Catalyst For Selective Catalytic Reduction Of Nitric Oxide With Ammonia", Gongshin Qi, Ralph T. Yang, Applied Cat. B: Environmental 60 (2005) 13-22, die SCR Aktivität eines Fe-Ionen-getauschten ZSM-5-Zeolithen für NO untersucht, wobei bei Temperaturen oberhalb 350°C in Anwesenheit von Ammoniak Konversionsraten von NO nahe 90% erzielt werden. Der lonenaustausch des untersuchten Zeolithen vom Typ ZSM-5 ist durch Imprägnierung mittels FeCl₃ vorgenommen. Die Kalzinierung der Katalysatormasse findet unter oxidierender Atmosphäre in Luft statt. Mittels Röntgendiffraktion und Elektronenspinresonanz-Messungen wird die Oxidationsstufe des in das Zeolithgerüst eingebundenen Eisen-Ions bei +2 und/oder +3 bestimmt. Es wird vermutet, dass insbesondere Eisen mit der Oxidationsstufe +2 für eine hohe katalytische Aktivität verantwortlich ist. Während der untersuchten SCR-Reaktion wird Eisen der Oxidationsstufe +2 allmählich oxidiert.

Auch in der vorbekannten Publikation "Structure/Reactivity Correlation In Fe/ZSM5 For DENOx Applications. In-situ XAFS Characterization And Catalysis", A.A. Battiston, J.H. Bitter, D.C. Koningsberger, J. Cat., 218 (2003) pp. 163-177, wird ein Fe-Ionen-getauschter Zeolith vom Typ ZSM-5 hinsichtlich seiner SCR Aktivität untersucht. Hierbei wird insbesondere der Koordinationsplatz des in das Zeolith-Gerüst eingebundenen Eisen-Ions mittels röntgenspektroskopischer Methoden analysiert. Der untersuchte ZSM-5-Zeolith ist mittels FeCl₃-Sublimation lonen-getauscht. Die SCR Aktivität der kalzinierten Katalysatormasse wird unter Verwendung von Butan und Isobutan als Reduktionsmittel analysiert. Die Katalysatormasse wird nach Behandlung mit Sauerstoff, Kohlenmonoxid und Isobutan jeweils röntgenspektroskopisch untersucht. Während der SCR-Reaktion soll sich die Oxidationsstufe des eingebundenen Eisen-Ions verringern.

Es ist Aufgabe der Erfindung, ein Verfahren zur Herstellung eines SCR aktiven Zeolith-Katalysators anzugeben, der insbesondere in einem niedrigen Temperaturbereich eine vergleichsweise hohe und dauerhafte SCR Aktivität aufweist, selbst wenn kein oder nur wenig NO₂ im Abgas vorhanden ist.

Die Aufgabe hinsichtlich des Herstellungsverfahrens wird erfindungsgemäß durch das Verfahren gemäß Anspruch 1 gelöst.

Umfangreiche eigene Untersuchungen haben den Verdacht erhärtet, dass ein Fe-Ionen-getauschter Zeolith eine erhöhte SCR Aktivität aufweist, wenn die Oxidationsstufe der eingebundenen Eisen-Ionen weniger als +3 beträgt und/oder die Dispersität der Fe-Ionen auf dem Zeolithen vergrößert ist. Unter Dispersität wird hierbei der Grad der Verteilung der Fe-Ionen auf dem Zeolithen verstanden. Eine große Dispersität zeigt eine Feinverteilung an. Eine geringe Dispersität spricht für das Vorhandensein von Fe-Clustern auf dem Zeolithen.

Ein solcher Zeolith-Katalysator kann an sich nach Ionen-Austausch und Kalzinierung beispielsweise dadurch hergestellt werden, dass er unter Formiergas oder mittels CO reduziert wird, wobei sich die Oxidationsstufe der eingebundenen Eisen-Ionen in Richtung auf +2 verringert, oder sich die Dispersität verändert.

Unter SCR-Bedingungen, d.h. in Anwesenheit von Sauerstoff, geht jedoch die katalytische Aktivität allmählich zurück. Dies geht einher mit einer Farbänderung des reduzierten, Fe-Ionen-getauschten Zeolith-Katalysators von einer blassgelben bis beigen Grundfarbe in einen rostroten Ton. Dies spricht dafür, dass an den Zeolithen gebundenes Eisen der Oxidationsstufe +2 zu Eisen der Oxidationsstufe +3, wie es Fe₂O₃ entspricht, oxidiert wird. Auch kann die Farbänderung in den rostroten Ton mit einer Abnahme der Dispersität des Eisens, d.h. mit einer Bildung von Fe-Clustern, auf dem Zeolithen in Verbindung gebracht werden.

Die Erfindung hat es sich nun zum Ziel gesetzt, den Fe-Ionen-getauschten, Zeolith-Katalysator mit hoher SCR Aktivität dauerhaft herzustellen. Nach äußerst umfangreichen empirischen Untersuchungen hat es sich herausgestellt, dass ein solcher Fe-Ionen-getauschter Zeolith-Katalysator, wobei Eisen überwiegend mit einer Oxidationsstufe von weniger als +3 vorliegt und/oder die Fe-Ionen mit hoher Dispersität an den Zeolithen angebunden sind, dauerhaft dadurch hergestellt werden kann, dass die Kalzinierung nicht wie üblich in oxidierender, sondern in einer reduzierenden Kohlenwasserstoff-Atmosphäre durchgeführt wird.

Aufgrund einer noch unbestimmten Reaktion mit den Kohlenwasserstoffen oder mit Zersetzungsprodukten der Kohlenwasserstoffe während des Kalzinierprozesses in einem Temperaturbereich zwischen 300°C und 600°C wird an den Zeolithen gebundenes Eisen, welches zu einer verringerten Oxidationsstufe, insbesondere von +2, reduziert ist, und/oder eine Feinverteilung des Eisens auf der Oberfläche des Zeolithen stabilisiert. Eine Rückoxidation in einer oxidierenden Atmosphäre oder eine erneute Bildung von Fe-Clustern auf der Oberfläche, insbesondere auch unter SCR-Bedingungen und hohen Temperaturen, ist blockiert. Die Koordinationsstelle des gebundenen Eisenkations an dem Zeolithen ist hochkomplex. Weder die exakte Gitterstruktur noch die chemische Nahumgebung des Eisens ist exakt bestimmbar. Insbesondere kann die Oxidationsstufe unter diesen Bedingungen innerhalb des anionischen Gerüsts des Zeolithen nicht mehr als ganzzahlig betrachtet werden, sondern es wird von gebrochenzahligen Oxidationsstufen gesprochen. Aufgrund der sich einstellenden Grundfarbe der unter reduzierenden Bedingungen kalzinierten Katalysatormasse von blassgelb bis beige kann die mittlere Oxidationsstufe jedoch mit einem Wert von weniger als +3 angegeben werden. Anders ausgedrückt, dürfte die überwiegende Anzahl der eingebundenen Eisen-Ionen mit einer Oxidationsstufe von +2 vorliegen, wenn man ganzzahlige Oxidationsstufen definiert.

Alternativ könnte auch die Feinverteilung des Eisens im Unterschied zu einer Cluster-Anhäufung maßgeblich für die beobachtbare Farbe sein. Es hat sich nämlich durch UV-VIS-Messungen an entsprechend aufbereiteten Zeolith-Proben, dh. anhand von Absorptionsspektren im ultravioletten und sichtbaren Spektralbereich, gezeigt, dass durch die angegebene Behandlung eine dauerhaft hohe Dispersität des Eisens auf dem Zeolithen geschaffen wird. Während bei herkömmlich ohne den Verfahrensschritt einer reduzierenden Kalzinierung hergestellten Proben in UV-VIS-Spektren ein breiter Absorptionspeak zwischen etwa 250 und 600 nm auftritt, wird bei nach dem vorliegend angegebenen Verfahren hergestellten Katalysatoren ein zu kürzeren Wellenlängen verschobener Peak mit einem Maximum bei etwa 250 nm beobachtbar, der bei etwa 400 nm abfällt und die Absorptionskurve der Vergleichsprobe unterschneidet. Da vorliegend eine Absorption bei über 400 nm für große Eisenpartikel (Eisenoxid, Cluster), eine Absorption bei 300 bis 400 nm für oligomere Fe-Cluster, und eine Absorption bei 200 bis 300 nm für Eisen in tetra- oder octahedraler Koordination spricht, weist das Messergebnis auf eine Erhöhung der Dispersität des Eisens auf dem Zeolithen hin. Diese Dispersität bleibt zudem dauerhaft erhalten. Die Neubildung von Fe-Clustern ist blockiert.

Der unter einer Kohlenwasserstoff-Atmosphäre reduzierte Zeolith wird anschließend in einer zweiten Temperaturbehandlung zwischen 300°C und 600°C in einer oxidierenden Atmosphäre weiter kalziniert, wobei die Reste oder Zersetzungsprodukte der Kohlenwasserstoffe durch Oxidation entfernt werden. Mit anderen Worten werden die Kohlenwasserstoffe oder Kohlenstoff verbrannt. Gleichzeitig findet eine weitere Verfestigung der Katalysatormasse statt, wie dies für den Kalzinierungsprozess maßgeblich ist.

Insgesamt wird der Zeolith bzw. die den Zeolithen enthaltende Katalysatormasse somit zweistufig kalziniert, wobei der Zeolith zunächst in einer Kohlenwasserstoff- Atmosphäre reduziert und anschließend in einer oxidierenden Atmosphäre im Wesentlichen zur Entfernung der organischen Reste oxidiert wird. Da die fertig hergestellte Katalysatormasse die blassgelbe bis beige Grundfarbe aufweist, ist zugleich gezeigt, dass durch Reduktion in einer Kohlenwasserstoff-Atmosphäre eine Oxidation des Eisens der Oxidationsstufe +2 in Eisen der Oxidationsstufe +3 und/oder eine Verringerung der Dispersität des Eisens blockiert ist. Die abschließende oxidative Kalzinierung führt zu keiner erneuten Oxidation des reduzierten Eisens und/oder zu keiner erneuten Verringerung der Dispersität. Weitergehende Untersuchungen belegen, dass die erfindungsgemäß hergestellte Katalysatormasse die gewünschte, dauerhaft hohe SCR Aktivität aufweist.

Die Erfindung weist keinerlei Beschränkung im Hinblick auf eine spezifische Ausgestaltung des Katalysatorkörpers auf. Die beschriebene Kalzinierung in reduzierender und oxidierender Atmosphäre kann sowohl an einem Zeolith-Pulver als auch an einem zeolithhaltigen Vollkatalysator sowie insbesondere an einem Tragkörper vorgenommen werden, der mit der zeolithhaltigen Masse beschichtet bzw. imprägniert ist.

Es zeigt sich, dass ein reduzierend kalzinierter Vollkatalysator, der auf Temperaturen bis 900°C erhitzt und mit einer Raumgeschwindigkeit von 10.000 1/h von Luft durchströmt wird, auch nach Stunden keine Farbänderung aufweist, die für eine Oxidation des eingebundenen Eisens der reduzierten Form und/oder für eine Verringerung der Dispersität sprechen würde. Unter denselben Versuchsbedingungen zeigen Fe-Ionen-getauschte herkömmliche Zeolithe, die nach der Kalzinierung reduziert wurden, bereits nach wenigen Minuten eine deutliche Farbänderung.

Weitergehende Untersuchungen haben ergeben, dass sich der Anteil an enthaltenem Eisen der Oxidationsstufe +2 und/oder eine hohe Dispersität des Eisens noch besser stabilisieren lässt, wenn während der ersten Temperaturbehandlung eine Temperatur von 500°C für eine Zeitdauer von mehr als 50 Minuten überschritten wird. Möglicherweise bedarf es einer Aktivierungsenergie, um die Koordinationsstelle des Eisens bzw. die anionische Gerüstumgebung des Zeolithen, dauerhaft zu konfigurieren bzw. zu erhalten. Eine Zeitdauer von mehr als 50 Minuten hat sich hierbei als vorteilhaft gezeigt.

Ferner hat es sich als für die Stabilisierung oder Reduzierung des angebundenen Eisens als vorteilhaft herausgestellt, den Zeolithen am Ende der ersten Temperaturbehandlung auf eine Temperatur unterhalb 400°C abzukühlen. Empirisch hat sich hierbei durch umfangreiche Messreihen ergeben, dass die SCR Aktivität verbessert ist, wenn der reduzierenden Temperaturbehandlung vor der Oxidation während der zweiten Temperaturbehandlung ein Abkühlschritt angefügt wird. Die besten Resultate lassen sich hierbei erzielen, wenn während der Abkühlung eine Temperatur von 400°C unterschritten wird.

In der Erfindung wird die erste Temperaturbehandlung in einer Inertgas-Atmosphäre durchgeführt. Zur Reduktion werden Kohlenwasserstoffe in die Inertgas-Atmosphäre zugeführt, und/oder der Zeolith unter Zugabe eines organischen Plastifizierers zu einer fließfähigen Masse vorverarbeitet, wobei der organische Plastifizierer durch Pyrolyse Kohlenwasserstoffe in die Inertgas-Atmosphäre freisetzt. Als Inertgas kann insbesondere Stickstoff eingesetzt werden, jedoch sind auch Edelgase vorstellbar.

In einer weiter bevorzugten Ausgestaltungsvariante der Erfindung weist die Kohlenwasserstoff-Atmosphäre weniger als 1 Vol.-% Sauerstoff auf. Ein höherer Sauerstoff-Anteil erschwert die Reduktion des eingebundenen Eisens.

Hinsichtlich der Kohlenwasserstoffe zur Herstellung der reduzierenden Atmosphäre eignen sich insbesondere Zersetzungsprodukte von langkettigen Kohlenwasserstoffen, die sich im angegebenen Temperaturbereich durch Pyrolyse bilden. Als Ausgangsprodukte haben sich insbesondere organische Polymere und/oder Biopolymere als besonders geeignet herausgestellt. Diese Polymere werden während der ersten Temperaturbehandlung mit in den Ofen eingebracht. Dort zersetzen sich diese bei den entsprechenden Temperaturen unter Sauerstoffauschluss in gasförmige Zersetzungsprodukte, die dann zur Kohlenwasserstoff-Atmosphäre beitragen. Als organische Polymere eignen sich insbesondere Polyethylene, Polyglykole oder Polypropylene. Als Biopolymere haben sich Polysaccharide, und hierbei insbesondere Zellulose, als vorteilhaft herausgestellt. Aber auch Polyglukosamine und Lipide können entsprechend eingesetzt werden.

In einer besonders bevorzugten Ausgestaltung der Erfindung werden die Kohlenwasserstoffe in Form einer reaktiven Vorstufe, auch als Precursor bezeichnet, der Zeolith-Masse vor der Kalzinierung beigemengt. Während der ersten Temperaturbehandlung zersetzt sich der reaktive Vorläufer in die gewünschten Zersetzungsprodukte, die dann die Kohlenwasserstoff-Atmosphäre ausbilden. Bei dieser Ausgestaltung brauchen während der ersten

Temperaturbehandlung keine zusätzlichen Kohlenwasserstoffe zugeführt werden. Die Kohlenwasserstoff-Atmosphäre bildet sich während der Temperaturbehandlung durch Pyrolyse der in der Zeolith-Masse enthaltenen Precursor-Moleküle.

Gemäß der Erfindung kann der Zeolith unter Zugabe eines organischen Plastifizierers zu einer fließfähigen, insbesondere extrudierbaren Masse vorverarbeitet werden, wobei die erste Temperaturbehandlung in einer Inertgas-Atmosphäre durchgeführt wird, so dass der organische Plastifizierer durch Pyrolyse Kohlenwasserstoffe in die Inertgas-Atmosphäre freisetzt. Auf diese Weise kann der organische Plastifizierer, der zur Herstellung der extrudierbaren Masse ohnedies erforderlich ist, zugleich zur Reduzierung und Stabilisierung des reduzierten Eisens eingesetzt werden. Weiterer Zusatzstoffe bedarf es nicht.

Während in herkömmlichen Verfahren der organische Plastifizierer während eines Kalzinierschrittes in Luft, d.h. unter einer oxidierenden Atmosphäre oxidiert und somit entfernt wird, entstehen nun in der Inertgas-Atmosphäre durch Pyrolyse des Plastifizieres zur Reduzierung gewünschte Zersetzungsprodukte, die zur Kohlenwasserstoff-Atmosphäre beitragen oder diese ausbilden. Üblicherweise werden als Plastifizierer Zellulose sowie Polyethylenglykol oder Polyethylenoxid einzeln oder in Kombination verwendet. Dabei wird zunächst der pulverförmige Zeolith zusammen mit dem Plastifizierer sowie gegebenenfalls mit weiteren Hilfs- und Füllstoffen unter Zugabe von Wasser zu der extrudierbaren Masse verarbeitet.

In einer ersten Alternative wird diese Masse dann zu einem, durchgehende Kanäle aufweisenden Wabenkörper extrudiert. Nach Trocknung des Wabenkörpers erfolgt dann der vorbeschriebene Kalzinierungsvorgang. Nach der reduzierenden Kalzinierung erfolgt die oxidative Kalzinierung, wobei die organischen Reste des Plastifizierers sowie die gebildeten Zersetzungsprodukte durch Oxidation entfernt werden. Durch die Entfernung des Plastifizierers mittels Oxidation werden während des Kalzinierungsprozesses in dem Katalysatorkörper Poren gebildet, wodurch sich die spezifische Oberfläche vergrößert.

In einer zweiten Alternative wird die hergestellte Masse als eine Beschichtung auf einen inerten Tragkörper, z.B. Cordierit, aufgetragen. Der beschichtete Tragkörper wird dann der reduzierenden und oxidierenden Kalzinierung unterzogen. Auch der inerte Tragkörper kann insbesondere als ein durchgehende Kanäle aufweisender Wabenkörper vorliegen.

Auch ist es vorstellbar, die hergestellte Masse vor deren Weiterverarbeitung der reduzierenden Kalzinierung zu unterziehen.

Die Kalzinierung kann in zwei aufeinander folgenden Stufen vorgenommen werden. Dabei wird der Zeolith zunächst in einem ersten Ofen unter einer reduzierenden Kohlenwasserstoff-Atmosphäre temperaturbehandelt und hierdurch reduziert. Anschließend wird der Zeolith unter Abkühlung dem ersten Ofen entnommen und einem zweiten Ofen zugeführt. In dem zweiten Ofen wird unter einer oxidierenden Atmosphäre, insbesondere unter Luft, die oxidierende Kalzinierung durchgeführt, wobei organische Restbestandteile entfernt werden.

In einer bevorzugten Ausgestaltung kann der gesamte Kalzinierungsprozess aber auch in einem einzigen Ofen durchgeführt werden. Dabei wird nach Abschluss der ersten Temperaturbehandlung die Atmosphäre im Ofen ausgetauscht, indem die reduzierende Kohlenwasserstoff-Atmosphäre abgezogen und durch Luft bzw. einer Sauerstoff enthaltenden Atmosphäre ersetzt wird. Für einen solchen Ofen sind entsprechende Zuleitungen, Gasanschlüsse, Ventile und eine entsprechende Steuerung vorzusehen. Die Durchführung der Kalzinierung in einem einzigen Ofen bietet insbesondere einen verfahrenstechnischen Vorteil, denn es entfällt der Arbeitsschritt des Transportes des reduzierten Zeolithen zu einem weiteren Ofen.

Als Zeolith hat sich insbesondere ein Zeolith des Typs Beta (Gerüststrukturbezeichnung: BEA) oder des Typs ZSM-5 (Gerüststrukturbezeichnung MFI) als vorteilhaft herausgestellt. Als weitere geeignete Zeolithe haben sich Faujasit, Ferrierit, γ-, ZSM-20, MCM-41, Chabasit und SAPO erwiesen. Zur allgemeinen Nomenklatur von Zeolithen wird hierbei auf Kirk-Othmer, "Encyclopedia of Chemical Technology", 3. Aufl., Bd. 15, John Wiley & Sons, New York, 1981, S. 640-669, verwiesen. Zur Klassifikation der Zeolithe wird weiter auf den Artikel "Chemical Nomenclature and Formulation of Compositions of Synthetic And Natural Zeolites" von R.M. Barrer, Pure Appl. Chem. 51 (1979), S. 1091-1100 hingewiesen. Die Struktur einzelner Zeolithe kann insbesondere auch aus "Zeolith-Atlas: Atlas of Zeolite Framework Types", 5. Aufl., Ch. Baerlocher, W.M. Meier und D.H. Olson, Amsterdam, Elsevier (2001) entnommen werden.

Zum Ionen-Austausch des Zeolithen gibt es an sich verschiedene Verfahren. Dabei werden die ursächlich im Zeolithen eingebundenen Kationen von Kalium, Natrium oder Calcium durch die gewünschten Kationen wie beispielsweise des Eisens ausgetauscht. Dies ist an sich leicht möglich, da die Kationen im Zeolithen nur über eine ionische Wechselwirkung mit dem anionischen Gerüst gehalten sind. Ein lonenaustausch durch Eisen kann beispielsweise mittels Sublimation aus Eisenchlorid, mittels einer Feststoffimprägnierung oder mittels Flüssigionenaustausch aus einer entsprechenden Lösung erfolgen.

In der Literatur wird für einen Fe-Ionen-getauschten Zeolithen eine SCR Aktivität festgestellt, die vom Herstellungs- bzw. vom Synthetisierungsprozess abhängig ist. Eigene Untersuchungen zeigen überraschend, dass die SCR Aktivität eines wie vorliegend beschrieben hergestellten Zeolith-Katalysator gleichbleibend hoch ist, unabhängig davon, wie der Fe-Ionen-getauschte Zeolith synthetisiert ist. Offensichtlich führt die Reduktion in einer Kohlenwasserstoff-Atmosphäre unabhängig vom Synthetisierungsprozess bzw. vom Prozess des Ionenaustausches stets zu einer vergleichbaren Reduzierung und Stabilisierung des Eisens mit einer Oxidationsstufe von +2 und/oder zu einer stabil hohen Dispersität, wobei die Bildung von Fe-Clustern blockiert ist.
Bevorzugt enthält der Zeolith Eisen mit einem Anteil zwischen 3 und 7 Gew.-%. In diesem Bereich wird die gewünschte katalytische Aktivität erreicht.

Es wird ferner ein SCR aktiver Zeolith-Katalysator beschrieben, der gemäß dem vorgenannten Verfahren hergestellt ist. Ein solcher Zeolith-Katalysator mit einer entsprechend kalzinierten Katalysatormasse weist einen Fe-Ionen-getauschten Zeolithen auf, wobei die Fe-Ionen überwiegend mit einer Oxidationsstufe von weniger als +3 und/oder mit einer hohen Dispersität vorliegen. Letzteres kann wie erwähnt experimentell mittels einer UV-VIS-Spektroskopie belegt werden. Es hat sich gezeigt, dass die UV-VIS Absorption einer entsprechenden Probe des erfindungsgemäß hergestellten Katalysators in einem Wellenlängenbereich zwischen 400 nm und 600 nm gegenüber vergleichbar hergestellten Proben ohne Reduktion in einer Kohlenwasserstoffatmosphäre dauerhaft erniedrigt ist. Die Dispersität des Eisens ist demnach entsprechend erhöht. Große Fe-Cluster sind deutlich verringert. Ein derart hergestellter Zeolith-Katalysator unterscheidet sich vom Stand der Technik insofern dadurch, dass die Umwandlung der Fe-Ionen zur höheren Oxidationsstufe +3 und/oder die Bildung von Fe-Clustern blockiert ist.

Zum Zeitpunkt der Anmeldung ist nicht absehbar, durch welche Herstellungsverfahren jenseits des beanspruchten Verfahrens ein die genannte Eigenschaft aufweisender SCR aktiver Zeolith-Katalysator herstellbar ist. Ein SCR aktiver Zeolith-Katalysator mit einer kalzinierten Katalysatormasse, enthaltend einen Fe-Ionen-getauschten Zeolithen, wobei die Fe-Ionen überwiegend mit einer Oxidationsstufe von weniger als +3 und/oder mit einer hohen Dispersität entsprechend der UV-VIS-Spektren vorliegen, und wobei eine Umwandlung der Fe-Ionen zur höheren Oxidationsstufe +3 und/oder die Bildung von Fe-Clustern blockiert ist, wird daher hier beschrieben.

Die gewählte Formulierung einer Blockierung der Umwandlung der Fe-Ionen zur höheren Oxidationsstufe +3 und/oder der Bildung von Fe-Clustern umfasst hierbei eine verlangsamte Kinetik ebenso wie eine Erhöhung einer Aktivierungsenergie. Auch wird vom dem Begriff einer Blockierung eine irreversible Reduzierung des Eisens in die Oxidationsstufe von +2 bzw. von weniger als +3 umfasst. Die beobachtbare Eigenschaft des angegebenen Katalysators kann auch dadurch beschrieben werden, dass der Adsorptionsplatz des Eisens auf dem Zeolithen dauerhaft stabilisiert ist, so dass die Dispersität erhalten bleibt. Die genannten Eigenschaften können jeweils einzeln völlig unabhängig oder in Kombination zur Beschreibung des Katalysators herangezogen werden.

Die den angegebenen Zeolith-Katalysator vom Stand der Technik unterscheidende Eigenschaft kann schließlich auch dadurch beobachtet und formuliert werden, dass die in einer der vorliegend niedrigen Oxidationsstufe der Fe-Ionen entsprechenden blassgelben bis beigen Grundfarbe vorliegende kalzinierte Katalysatormasse bei Erhitzung auf eine Temperatur bis 900°C unter gleichzeitiger Luftdurchströmung mit einer Raumgeschwindigkeit von 10.000 1/h auch nach einer Stunde keine Farbänderung zeigt. Eine vergleichbare Katalysatormasse, die mittels Formiergas oder CO herkömmlich reduziert ist, zeigt unter denselben Versuchsbedinungen bereits nach wenigen Minuten eine Farbänderung in eine rostrote Grundfarbe, die der höheren Oxidationsstufe der Fe-Ionen von +3 oder einer verringerten Dispersität entspricht.

Als Zeolith für den SCR aktiven Zeolith-Katalysator kann bevorzugt einer der vorerwähnten Zeolithe verwendet werden. Insbesondere ist der Zeolith ein Zeolith des Typs Beta oder des Typs MFI.

In einer vorteilhaften Ausgestaltung liegt der Zeolith-Katalysator als ein extrudierter Vollkatalysator vor.

Ferner kann das oben beschriebene Verfahren auch bei weiteren Ionengetauschten Zeolithen durchgeführt werden. Entsprechend wird ein Ionengetauschter Zeolith allgemeiner Art zunächst in einer reduzierenden Kohlenwasserstoff-Atmosphäre einer ersten Temperaturbehandlung in einem Bereich zwischen 300°C und 600°C unterzogen, wobei sich die Oxidationsstufe der eingebrachten Ionen verringert und/oder die Dispersität dieser Ionen auf dem Zeolithen vergrößert, anschließend der reduzierte Zeolith in einer oxidierenden Atmosphäre einer zweiten Temperaturbehandlung zwischen 300°C und 600°C unterzogen, wobei Kohlenwasserstoffreste und/oder Kohlenstoffreste oxidativ entfernt werden, und der Zeolith während der ersten und der zweiten Temperaturbehandlung zu einem Katalysator kalziniert.

Zum lonenaustausch haben sich neben dem bevorzugten Eisen hinsichtlich der vorgenannten katalytischen Aktivität Metalle aus der Gruppe, die Cu, Hf, La, Au, In, V, Lanthanide und Übergangsmetalle der Gruppe VIII des Periodensystems enthält, als vorteilhaft herausgestellt. Insbesondere sind neben Eisen, Kupfer, Cer, Hafnium, Lanthan, Platin, Silber, Indium, Vanadium, Ruthenium und Osmium zu bevorzugen. Diese Metalle liegen dann im Zeolithen als Metall-Kationen vor, wobei sich das für Eisen Gesagte entsprechend auf diese Kationen übertragen lässt.

Dementsprechend wird sich die Oxidationsstufe der Metall-Ionen während der ersten, reduzierenden Temperaturbehandlung verringern und/oder ihre Dispersität auf dem Zeoltihen vergrößern.

Wie bereits ausgeführt, werden aufgrund einer noch unbestimmten Reaktion mit den Kohlenwasserstoffen oder mit Zersetzungsprodukten der Kohlenwasserstoffe während des Kalzinierprozesses in einem Temperaturbereich zwischen 300°C und 600°C die an den Zeolithen gebundenen, vorgenannten Metallionen in der verringerten Oxidationsstufe, und/oder deren erreichte Feinverteilung auf der Oberfläche des Zeolithen stabilisiert. Eine Rückoxidation in einer oxidierenden Atmosphäre oder eine erneute Bildung von Clustern auf der Oberfläche, insbesondere auch unter SCR-Bedingungen und hohen Temperaturen, ist blockiert. Die Koordinationsstelle des gebundenen Metallkations an dem Zeolithen ist hochkomplex. Weder die exakte Gitterstruktur noch die chemische Nahumgebung der angebundenen Metallionen ist exakt bestimmbar. Insbesondere kann die Oxidationsstufe unter diesen Bedingungen innerhalb des anionischen Gerüsts des Zeolithen nicht mehr als ganzzahlig betrachtet werden, sondern es wird von gebrochenzahligen Oxidationsstufen gesprochen.

Dementsprechend wird auch ein SCR aktiver Zeolith-Katalysator mit einer kalzinierten Katalysatormasse beschrieben, enthaltend einen Ionen getauschten Zeolithen, wobei die Ionen überwiegend mit einer durch Reduktion verringerten Oxidationsstufe und/oder auf dem Zeolithen mit hoher Dispersität vorliegen umfasst, wobei eine Umwandlung der Ionen zur höheren Oxidationsstufe und/oder eine Verringerung der Dispersität blockiert ist. Als Metallionen sind bevorzugt Metalle aus der Gruppe, die Cu, Hf, La, Au, In, V, Lanthanide und Übergangsmetalle der Gruppe VIII des Periodensystems enthält, eingesetzt. Insbesondere sind neben Eisen, Kupfer, Cer, Hafnium, Lanthan, Platin, Silber, Indium, Vanadium, Ruthenium und Osmium zu bevorzugen. Ein solcher Katalysator zeigt insbesondere auch bei einer Luftdurchströmung mit höheren Temperaturen (über 700°C) keinen Farbumschlag, der auf einer Veränderung der Oxidationsstufe oder der Dispersität zuruckzuführen wäre.

Ausführungsformen der Erfindung werden anhand einer Zeichnung sowie der folgenden Beispiele näher erläutert. Dabei zeigen:
- Fig. 1: schematisch ein Ablaufdiagramm zur Herstellung eine SCR aktiven Zeolith-Katalysators und
- Fig. 2: in einem Messdiagramm für verschiedene Katalysatoren einen Vergleich der temperaturabhängigen Umwandlungsrate für NO in Anwesenheit von Ammoniak.

### Beispiel 1a:

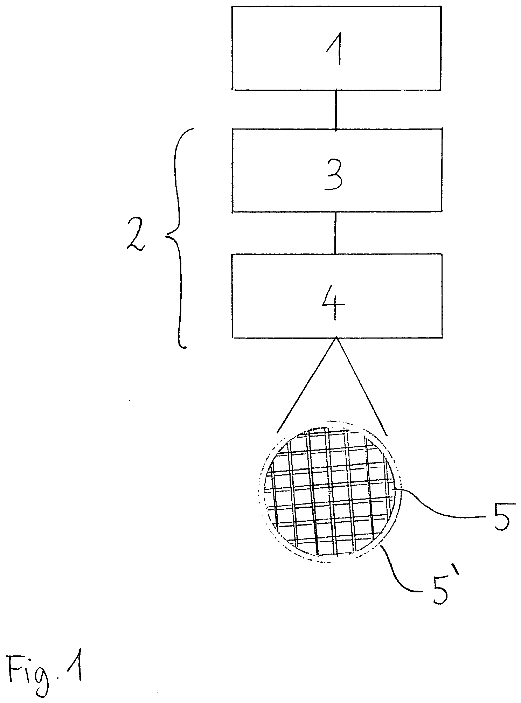

Fig. 1 zeigt schematisch anhand eines Ablaufdiagramms die Herstellung eines SCR aktiven Zeolith-Katalysators gemäß einer beispielhaften Ausführungsvariante. In einem ersten Schritt 1 wird ein pulverförmiger Fe-Ionen-getauschter, synthetischer MFI-Zeolith mit einem Anteil von 3 Gew.-% Eisen zu einer plastischen und fließfähigen Masse verarbeitet. Hierzu wird der pulverförmige MFI-Zeolith mit Glasfasern und ebenfalls pulverförmigem Böhmit vermischt und unter Zugabe von Zellulose, eines handelsüblichen Plastifizierers und Polyethylenoxid als organisches Hilfsmittel in einer sauren wässrigen Lösung mit einem pH-Wert von < 5 zu der plastischen und fließfähigen Mischung verarbeitet. Die plastische Mischung wird anschließend zu einem wabenförmigen, durchgehende Kanäle aufweisenden Katalysatorkörper mit einem runden Querschnitt extrudiert, der eine Zelldichte von 300 cpsi (cells per square inch) aufweist. Anschließend wird der Katalysatorkörper getrocknet. Der Vollkatalysator weist eine Anströmfläche mit einem Durchmesser von etwa 2,5 cm (1 Zoll) und eine Durchströmungslänge von etwa 7 cm auf.

Anschließend wird der derart hergestellte Vollkatalysator einem Kalzinierungsschritt 2 unterzogen. Dazu wird der Katalysatorkörper in einem Ofen unter einer N2-Atmosphäre einer ersten Temperaturbehandlung 3 unterzogen. Der Katalysatorkörper wird dabei auf eine Temperatur von 600°C aufgeheizt und dort für einen Zeitraum von 1,5 Stunden gehalten. Anschließend wird der Katalysatorkörper abgekühlt und bei Raumtemperatur aus dem Ofen entnommen.

Bei der ersten Temperaturbehandlung 3 in einer Inertgas-Atmosphäre zersetzen sich die Zellulose sowie das als organischer Plastifizierer eingebrachte Polyethylenoxid durch Pyrolyse in gasförmige Kohlenwasserstoffe, wodurch sich im Ofen eine reduzierende Kohlenwasserstoff-Atmosphäre ausbildet. Unter diesen Bedingungen wird im MFI-Zeolithen enthaltenes Eisen allmählich zu Eisen mit einer Oxidationsstufe von +2, wenigstens zu einer gebrochenzahligen Oxidationsstufe von weniger als +3 reduziert und/oder vergrößert sich die Dispersität des Eisens auf dem Zeolithen. Über den gewählten Temperaturverlauf wird erreicht, dass Eisen in der reduzierten Form oder die hohe Dispersität des Eisens stabilisiert wird, was maßgeblich durch den Einfluss der in der Atmosphäre enthaltenen Kohlenwasserstoffe geschieht. Durch die Temperaturbehandlung wird weiter aus dem Katalysatorkörper Wasser ausgetrieben sowie eine Verfestigung der Katalysatormasse erzielt. Während des reduzierenden Kalzinierens erhält die Katalysatormasse zugleich eine blassgelbe bis beige Grundfarbe, die auf ein Vorhandensein von Eisen der Oxidationsstufe +2 und/oder auf eine Erhöhung der Dispersität hindeutet. Diese Färbung ist gegebenenfalls überdeckt von den Zersetzungsprodukten der organischen Polymere, so dass der Katalysatorkörper im Ganzen schwarz erscheint.

Anschließend wird der reduzierte Zeolith-Katalysator zur Durchführung einer zweiten Temperaturbehandlung 4 in einen zweiten Ofen gebracht, in dem als Atmosphäre Luft verwendet ist. Dort wird der Katalysatorkörper wiederum auf eine Temperatur von etwa 600°C gebracht und dort für eine Dauer von etwa 50 Minuten gehalten. Während dieser Zeit werden die im Katalysator befindlichen Zersetzungsprodukte sowie die noch vorhandenen ursprünglichen organischen Polymere der Zellulose und der Plastifizierer oxidiert und endgültig entfernt. Die Katalysatormasse verfestigt sich weiter. Am Ende der zweiten Temperaturbehandlung 4 hat der Zeolith-Katalysator nun sichtbar die erwähnte blassgelbe bis beige Grundfarbe.

Anschließend wird der Zeolith-Katalysator abgekühlt und aus dem zweiten Ofen entnommen. Es resultiert der fertige Zeolith-Katalysator, der als ein wabenförmiger Vollkatalysator 5 vorliegt und für seinen Einsatz zum Abbau von Stickoxiden gemäß dem SCR-Verfahren vorbereitet ist.

### Beispiel 1b:

In einer alternativen Variante werden die Temperaturbehandlungen 3 und 4 in einem gemeinsamen Ofen durchgeführt. Dabei wird nach Abschluss der ersten Temperaturbehandlung 3 der Katalysatorkörper auf eine Temperatur von unterhalb 400°C abgekühlt, anschließend die reduzierende Kohlenwasserstoff- Atmosphäre abgezogen und Luft in den Ofen gelassen. Unmittelbar daran schließt sich dann die zweite Temperaturbehandlung 4 an, die analog Beispiel 1a durchlaufen wird.

### Beispiel 1c:

Entsprechend Beispiel 1a wird eine plastische und fließfähige Masse hergestellt. Ein Katalysatorkörper aus Cordierit gleicher Dimension und gleicher Zelldichte wird als inerter Tragkörper mit der plastischen Masse beschichtet. Anschließend wird der beschichtete Tragkörper den weiteren Verfahrensschritten 3 und 4 entsprechend Beispiel 1a unterzogen. Es resultiert ein beschichteter Katalysatorkörper 5'.

In einem Versuch werden die entsprechend Beispielen 1a, 1b und 1c hergestellten Vollkatalysatoren 5 bzw. 5' auf 900°C aufgeheizt und mit einer Raumgeschwindigkeit von 10.000 1/h mit Luft für 2 Stunden durchströmt. Die Vollkatalysatoren 5 bzw. 5' zeigen hierbei keine Farbänderung. Sie behalten die innewohnende blassgelbe bis beige Grundfarbe. Mit anderen Worten ist Eisen der Oxidationsstufe +2 und/oder die hohe Dispersität des Eisens durch die reduzierende Kalzinierung gemäß der ersten Temperaturbehandlung 3 dauerhaft stabilisiert. Selbst unter einer oxidierenden Atmosphäre wie Luft findet keine Oxidierung des Eisens der Oxidationsstufe +2 in Eisen der Oxidationsstufe +3 statt, bzw. bilden sich keine großen Fe-Cluster. Eine Oxidation würde unmittelbar zu einer Farbänderung in eine rostrote Grundfarbe führen, wie sie typisch für Eisen der Oxidationsstufe +3 ist. Diese Farbe ist typisch für Rost, wobei Eisen vornehmlich in der Gestalt eines Fe₂O₃ vorliegt. Gleiches gilt für vorhandene Eisenoxid-Cluster.

### Beispiel 2:

Im Vergleich hierzu wird ein gemäß Beispiel 1a nach Verfahrensschritt 1 identisch hergestellter Zeolith-Katalysator gefertigt. Dieser wird anschließend nach herkömmlicher Technologie unter Luft bei Temperaturen oberhalb 500°C kalziniert.

### Beispiel 3:

Entsprechend Beispiel 1a wird wiederum ein Katalysatorkörper mit einem runden Querschnitt, einer Zelldichte von 300 cpsi, mit einer Anströmfläche mit einem Durchmesser von 2,5 cm und einer Durchströmungslänge von etwa 7 cm extrudiert. Anstelle eines Zeolithen des Typs MFI wird jedoch als Zeolith ein Fe-Ionen-getauschter, synthetischer Zeolith des Typs Beta verwendet. Ein Zeolith des Typs Beta unterscheidet sich von einem Zeolithen des Typs MFI durch eine andere charakteristische dreidimensionale Struktur.

Anschließend wird für die Katalysatoren 1a, 2 und 3 die katalytische Aktivität zur Umsetzung von NO in Anwesenheit von Ammoniak bestimmt. Hierzu werden die Katalysatoren 1a, 2 und 3 jeweils von einem Normgas aus Stickstoff mit einem Anteil von 600 ppm an NO bei einer normierten Raumgeschwindigkeit von 25.000 1/h durchströmt. Es wird jeweils der Anteil an NO vor und nach Durchströmen der Katalysatorkörper bestimmt und hieraus der Umsatz bezogen auf den Anteil an NO vor dem Katalysator bestimmt. Dem Normgas wird als Reduktionsmittel Ammoniak NH₄ mit einem Stöchiometriefaktor von α = 0,9, d.h. leicht unterstöchiometrisch in Bezug auf den Anteil an NO, zugeführt. Anschließend wird für verschiedene Temperaturen unterhalb 300°C der jeweilige Umsatz bestimmt.

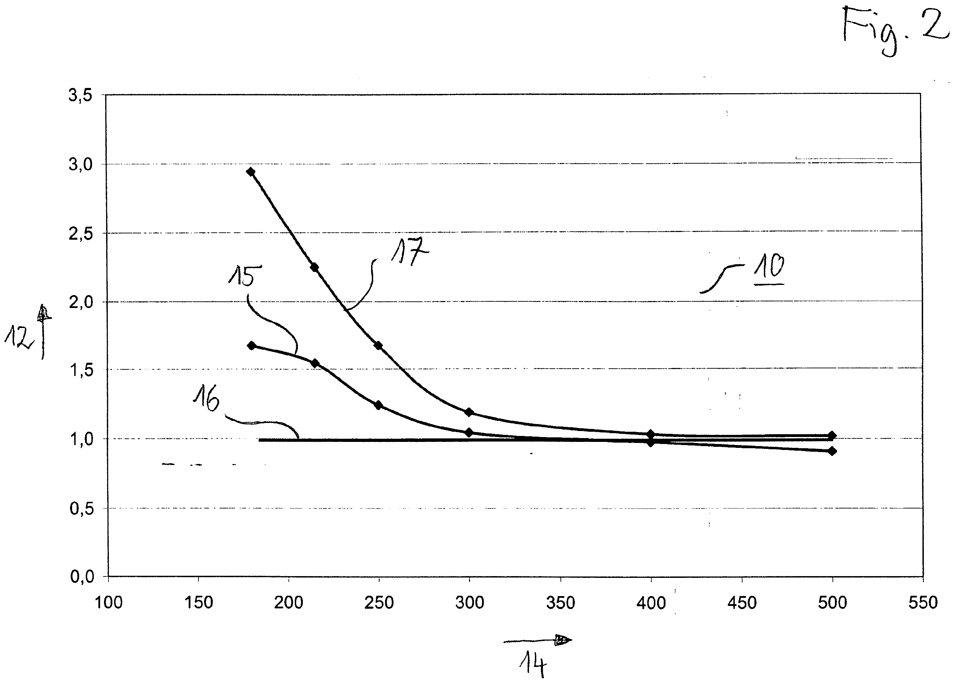

Das Ergebnis der Untersuchungen ist in Fig. 2 dargestellt. Dabei ist in einem Messdiagramm 10 jeweils der auf den Vergleichskatalysator 2 normierte Umsatz an NO über der Temperatur 14 aufgetragen. In dem Messdiagramm 10 sind die Messwerte für den Katalysator 1a (MFI) entsprechend Kurve 15, für den Katalysator 3 (Beta) entsprechend der Messkurve 17 und für den Vergleichskatalysator 2 entsprechend der Messkurve 16 eingetragen. Letztere ergibt sich durch die Normierung als eine Gerade des Wertes 1.

Man erkennt entsprechend dem Messdiagramm 10 gemäß Fig. 2, dass der durch reduziertes Kalzinieren gewonnene Vollkatalysator 1a, Zeolith MFI (Messkurve 15) im Niedertemperaturbereich von unterhalb 300°C eine im Vergleich zu einem herkömmlich hergestellten Katalysator gleicher Zusammensetzung eine deutlich verbesserte katalytische Aktivität hinsichtlich der selektiven katalytischen Reduktion von NO aufzeigt. Der Umsatz ist dort erhöht. Der oxidierte Vollkatalysator 3, Zeolith Beta (Messkurve 17) zeigt eine noch weiter verbesserte katalytische Aktivität.

Im Temperaturbereich oberhalb 300°C nähern sich die erzielten Umsätze an NO bzw. die katalytischen Aktivitäten der Katalysatoren 1a und 3 denen des Vergleichskatalysators 2.

Fig. 2 zeigt, dass ein gemäß Ausführungsvarianten des erfindungsgemäßen Verfahrens hergestellter Vollkatalysator eine hervorragende katalytische Aktivität hinsichtlich der selektiven katalytischen Reduktion von Stickoxiden im Niedertemperaturbereich unterhalb 300°C aufweist. Durch die dauerhafte Stabilisierung des Eisens in der Oxidationsstufe +2 bzw. in einer gebrochenzahligen Oxidationstufe von weniger als +3 und/oder der dauerhaft hohen Dispersität des Eisens auf dem Zeolithen ist insofern ein derart hergestellter SCR aktiver Zeolith-Katalysator hervorragend für den Einsatz zur Stickoxidreduktion in den Abgasen von Verbrennungsmotoren geeignet, die mit Luftüberschuss betrieben werden, wie dies insbesondere für einen Dieselmotor der Fall ist. Während bei herkömmlichen Zeolith-Katalysatoren die katalytische Aktivität im Niedertemperaturbereich maßgeblich vom Anteil an NO₂ abhängt, ist dies für den vorliegend angegebenen Zeolith-Katalysator nicht der Fall. Fig. 2 zeigt eine hervorragende katalytische Aktivität der Katalysatoren zum Abbau von NO gerade in Abwesenheit von NO₂. Ein für herkömmliche Zeolith-Katalysatoren, insbesondere auch für Fe-Ionen-getauschte Zeolith-Katalysatoren, gewöhnlich vorgeschalteter Oxidationskatalysator, der in einem Niedertemperaturbereich den Anteil an NO₂ an den emittierten Stickoxiden erhöht, kann insofern für den vorliegend angegebenen Zeolith-Katalysator gänzlich entfallen. Dies bedeutet nicht nur eine Bauraumersparnis. Vielmehr bietet die Erfindung einen beträchtlichen Kostenvorteil, da die notwendigen Oxidationskatalysatoren in der Regel edelmetallhaltig und somit teuer sind.

### Bezugszeichenliste

- 1: Herstellung extrudierbare Masse
- 2: Kalzinierung
- 3: erste, reduzierende Temperaturbehandlung
- 4: zweite, oxidierende Temperaturbehandlung
- 5: Vollkatalysator, extrudiert
- 5': Vollkatalysator, beschichtet
- 10: Grafik
- 12: NOx-Umsatz
- 14: Temperatur
- 15: Messkurve MFI-Katalysator 1a
- 16: Messkurve Vergleichskatalysator 2
- 17: Messkurve Beta-Katalysator 3

## Patentansprüche

1. Verfahren zur Herstellung eines SCR aktiven Zeolith-Katalysators,
**dadurch gekennzeichnet,**
**dass** ein Fe-Ionen getauschter Zeolith zunächst in einer reduzierenden Kohlenwasserstoff-Atmosphäre einer ersten Temperaturbehandlung (3) in einem Bereich zwischen 300°C und 600°C unterzogen wird, wobei sich die Oxidationsstufe der Fe-Ionen verringert und/oder die Dispersität der Fe-Ionen auf dem Zeolithen vergrößert, wobei anschließend der reduzierte Zeolith in einer oxidierenden Atmosphäre einer zweiten Temperaturbehandlung (4) zwischen 300°C und 600°C unterzogen wird, durch die Kohlenwasserstoffreste und/oder Kohlenstoffreste oxidativ entfernt werden, und dass der Zeolith während der ersten und der zweiten Temperaturbehandlung (3 bzw. 4) zu einem Katalysator kalziniert wird (2), **dadurch gekennzeichnet, dass** (i) die erste Temperaturbehandlung (3) in einer Inertgas-Atmosphäre durchgeführt wird, der zur Reduktion Kohlenwasserstoffe zugeführt werden, und/oder, (ii) dass der Zeolith unter Zugabe eines organischen Plastifizierers zu einer fließfähigen Masse vorverarbeitet wird, und dass die erste Temperaturbehandlung (3) in einer Inertgas-Atmosphäre durchgeführt wird, wobei der organische Plastifizierer durch Pyrolyse Kohlenwasserstoffe in die Inertgas-Atmosphäre freisetzt.

2. Verfahren nach Anspruch 1,
**dadurch gekennzeichnet,**
**dass** während der ersten Temperaturbehandlung (3) eine Temperatur von 500°C für eine Zeitdauer von mehr als 50 Minuten überschritten wird.

3. Verfahren nach Anspruch 1 oder 2,
**dadurch gekennzeichnet,**
**dass** der Zeolith am Ende der ersten Temperaturbehandlung (3) auf eine Temperatur unterhalb 400°C abgekühlt wird.

4. Verfahren nach einem der vorhergehenden Ansprüche,
**dadurch gekennzeichnet,**
**dass** die Kohlenwasserstoff-Atmosphäre weniger als 1 Vol.-% Sauerstoff aufweist.

5. Verfahren nach Eigenschaft (i) in einem der vorhergehenden Ansprüche,
**dadurch gekennzeichnet,**
**dass** als Kohlenwasserstoffe organische Polymere und/oder Biopolymere zugeführt werden, die während der ersten Temperaturbehandlung (3) in gasförmige Zersetzungsprodukte überführt werden.

6. Verfahren nach Anspruch 5,
**dadurch gekennzeichnet,**
**dass** als Kohlenwasserstoffe Polyethylene, Polyglykole und/oder Zellulose zugeführt werden.

7. Verfahren nach Eigenschaft (ii) in einem der vorhergehenden Ansprüche,
**dadurch gekennzeichnet,**
**dass** als Plastifizierer ein Polyethylenglykol, ein Polyethlyenoxid und/oder Zellulose verwendet werden.

8. Verfahren nach Anspruch 7,
**dadurch gekennzeichnet, dass**
die fließfähige Masse eine extrudierbare Masse ist und dass die extrudierbare Masse zu einem Vollkatalysator (5) extrudiert wird, wobei der Vollkatalysator (5) den Verfahrensschritten unterzogen wird.

9. Verfahren nach Anspruch 7,
**dadurch gekennzeichnet,**
**dass** ein Tragkörper (5') mit der fließfähigen Masse beschichtet wird, und dass der beschichtete Tragkörper (5') den Verfahrensschritten unterzogen wird.

10. Verfahren nach einem der vorhergehenden Ansprüche,
**dadurch gekennzeichnet,**
**dass** die zweite Temperaturbehandlung (4) unter Luft durchgeführt wird.

11. Verfahren nach einem der vorhergehenden Ansprüche,
**dadurch gekennzeichnet,**
**dass** die erste und die zweite Temperaturbehandlung (3 bzw. 4) unter Gasaustausch unmittelbar aufeinanderfolgend durchgeführt werden.

12. Verfahren nach einem der vorhergehenden Ansprüche,
**dadurch gekennzeichnet,**
**dass** als Zeolith ein Zeolith des Typs Beta oder MFI verwendet wird.

13. Verfahren nach einem der vorhergehenden Ansprüche,
**dadurch gekennzeichnet,**
**dass** der Zeolith zwischen 3 und 7 Gew.-% Eisen enthält.

## Claims

1. Method for the production of a SCR-active zeolite-catalytic converter,
**characterised in that**:
an Fe ion-exchanged zeolite is initially subjected to a first temperature treatment (3) in a range between 300 °C and 600 °C in a reducing hydrocarbon atmosphere, whereby the oxidation state of the Fe ions decreases and / or the dispersion of the Fe ions on the zeolite is increased, whereby then the reduced zeolite in an oxidising atmosphere is subjected to a second temperature treatment (4) between 300 °C and 600 °C by which the hydrocarbon radicals and / or carbon radicals are removed by oxidation, and **in that** the zeolite is calcined to a catalytic converter during the first and second temperature treatments (3 and 4, respectively) (2), **characterised by** the following process (i) the first temperature treatment (3) is performed in an inert gas atmosphere to which hydrocarbons are fed for reduction and / or, (ii) that the zeolite is pre-processed with the addition of an organic plasticiser to a flowable mass, and **in that** the first temperature treatment (3) is carried out in an inert gas atmosphere, whereby the organic plasticiser releases hydrocarbons into the inert gas atmosphere by pyrolysis.

2. Method according to Claim 1,
**characterised in that**;
during the first temperature treatment (3), a temperature of 500 °C is exceeded for a period of more than 50 minutes.

3. Method according to Claim 1 or 2,
**characterised in that**,
the zeolite at the end of the first temperature treatment (3) is cooled to a temperature of less than 400 °C.

4. Method according to one of the preceding claims,
**characterised in that**,
the hydrocarbon atmosphere has less than 1% by volume of oxygen.

5. Method according to characteristic (i) in one of the preceding claims,
**characterised in that**,
organic polymers and / or biopolymers are fed as hydrocarbons, which are converted during the first temperature treatment (3) into gaseous decomposition products.

6. Method according to Claim 5,
**characterised in that**,
polyethylenes, polyglycols and / or cellulose are fed as hydrocarbons.

7. Method according to Characteristic (ii) in one of the preceding claims,
**characterised in that**,
as plasticiser, a polyethylene glycol, a polyethylene oxides and / or cellulose are used.

8. Method according to Claim 7,
**characterised in that**;
the flowable compound is an extrudable compound and **in that** the extrudable mass is extruded to a packed catalytic converter (5), wherein the packed catalytic converter (5) is subjected to the method steps.

9. Method according to Claim 7,
**characterised in that**,
a carrier body (5') is coated with the flowable compound, and that the coated carrier body (5') is subjected to the method steps.

10. Method according to one of the preceding claims,
**characterised in that**;
the second temperature treatment (4) is carried out under air.

11. Method according to one of the preceding claims,
**characterised in that**;
the first and the second temperature treatments (3 or 4) are carried out with gas exchange in immediate succession.

12. Method according to one of the preceding claims,
**characterised in that**;
a zeolite of the beta or MFI type is used.

13. Method according to one of the preceding claims,
**characterised in that**;
the zeolite contains between 3 and 7% by weight of iron.

## Revendications

1. Procédé pour la fabrication d'un catalyseur zéolithique à activité SCR, **caractérisé en ce qu'**on soumet une zéolithe qui a fait l'objet d'un échange d'ions Fe, d'abord, dans une atmosphère réductrice à base d'hydrocarbures, à un premier traitement thermique (3) dans une plage entre 300 °C et 600 °C, ce qui donne lieu à une diminution de l'état d'oxydation des ions Fe et/ou à une augmentation de la dispersité des ions Fe sur la zéolithe ; dans lequel on soumet ensuite la zéolithe réduite, dans une atmosphère oxydante, à un second traitement thermique (4) entre 300 °C et 600 °C, par lequel on élimine par oxydation des résidus d'hydrocarbures et/ou des résidus de carbone, et **en ce qu'**on calcine la zéolithe au cours du premier et du second traitement thermique (3, respectivement 4) pour obtenir un catalyseur (2), **caractérisé en ce que** (i) le premier traitement thermique (3) est mis en oeuvre sous l'atmosphère d'un gaz inerte qui est acheminé à des fins de réduction des hydrocarbures, et/ou (ii) **en ce qu'**on soumet la zéolithe à un prétraitement via l'addition d'un plastifiant organique afin d'obtenir une masse apte à l'écoulement, et **en ce qu'**on met en oeuvre le premier traitement thermique (3) sous l'atmosphère d'un gaz inerte ; dans lequel le plastifiant organique libère par pyrolyse les hydrocarbures dans l'atmosphère d'un gaz inerte.

2. Procédé selon la revendication 1, **caractérisé en ce que**, au cours du premier traitement thermique (3), on dépasse une température de 500 °C pendant un laps de temps supérieur à 50 minutes.

3. Procédé selon la revendication 1 ou 2, **caractérisé en ce qu'**on refroidit la zéolithe à la fin du premier traitement thermique (3) jusqu'à une température inférieure à 400 °C.

4. Procédé selon l'une quelconque des revendications précédentes, **caractérisé en ce que** l'atmosphère à base d'hydrocarbures présente une teneur en oxygène inférieure à 1 % en volume.

5. Procédé selon la propriété (i) dans une des revendications précédentes, **caractérisé en ce qu'**on achemine, à titre d'hydrocarbures, des polymères organiques et/ou des biopolymères, qui sont transformés, au cours du premier traitement thermique (3), en produits de décomposition gazeux.

6. Procédé selon la revendication 5, **caractérisé en ce qu'**on achemine, à titre d'hydrocarbures, des polyéthylènes, des polyglycols et/ou de la cellulose.

7. Procédé selon la propriété (ii) dans une des revendications précédentes, **caractérisé en ce qu'**on utilise, à titre de plastifiant, un polyéthylèneglycol, un oxyde de polyéthylène et/ou de la cellulose.

8. Procédé selon la revendication 7, **caractérisé en ce que** la masse apte à l'écoulement est une masse apte à l'extrusion et **en ce que** la masse apte à l'extrusion est extrudée pour obtenir un catalyseur massique (5) ; dans lequel le catalyseur massique (5) est soumis aux étapes opératoires.

9. Procédé selon la revendication 7, **caractérisé en ce qu'**on enduit un corps de support (5') avec la masse apte à l'écoulement et on soumet le corps de support enduit (5') aux étapes opératoires.

10. Procédé selon l'une quelconque des revendications précédentes, **caractérisé en ce que** l'on met en oeuvre le second traitement thermique (4) à l'air.

11. Procédé selon l'une quelconque des revendications précédentes, **caractérisé en ce que** l'on met en oeuvre le premier et le second traitement thermique (3, respectivement 4) de manière directement successive dans des conditions d'échange gazeux.

12. Procédé selon l'une quelconque des revendications précédentes, **caractérisé en ce que** l'on utilise, à titre de zéolithe, une zéolithe de type bêta ou MFI.

13. Procédé selon l'une quelconque des revendications précédentes, **caractérisé en ce que** la zéolithe contient du fer entre 3 et 7 % en poids.
